Europäisches Patentamt

European Patent Office

Office européen des brevets

(19)

(11)  EP 1 548 458 A2

(12)  EUROPEAN PATENT APPLICATION

(43) Date of publication:
    29.06.2005 Bulletin 2005/26

(51) Int Cl.7: **G01S 7/03**, G01S 13/93,
    H01Q 1/32

(21) Application number: 04019181.9

(22) Date of filing: 12.08.2004

(84) Designated Contracting States:
    **AT BE BG CH CY CZ DE DK EE ES FI FR GB GR**
    **HU IE IT LI LU MC NL PL PT RO SE SI SK TR**
    Designated Extension States:
    **AL HR LT LV MK**

(30) Priority: 26.11.2003 JP 2003394872

(71) Applicant: **Hitachi, Ltd.**
    **Chiyoda-ku, Tokyo 100-8010 (JP)**

(72) Inventors:
    • **Izumi, Shiho, Hitachi,Ltd.,Int. Prop. Group**
      **Chiyoda-ku, Tokyo 100-8220 (JP)**
    • **Kuroda, Hiroshi, Hitachi,Ltd.,Int. Prop. Group**
      **Chiyoda-ku, Tokyo 100-8220 (JP)**
    • **Kuragaki, Satoru, Hitachi,Ltd.,Int. Prop. Group**
      **Chiyoda-ku, Tokyo 100-8220 (JP)**

(74) Representative: **Beetz & Partner Patentanwälte**
    **Steinsdorfstrasse 10**
    **80538 München (DE)**

(54) **Vehicle-mounted radar**

(57)    The invention relates to a vehicle-mounted radar includes a transmission antenna (2) for radiating a radio wave and three antennas (3a, 3b, 3c) including first, second and third reception antennas for receiving reflected wave of the radio wave from an object, wherein a horizontal width of the second reception antenna is less than a horizontal width of each of the first and third reception antennas. It then becomes possible to separately detect two objects, such as two preceding vehicles, each of the rate and distance to the radar mounting vehicle of which is identical with each other, as two objects.

FIG. 1

**Description**

BACKGROUND OF THE INVENTION

The present invention relates to a vehicle-mounted radar.

Pre-crash safety measures in which a crash of a car is predicted to rewind a seat belt and to suddenly brake the car to a halt have been put to practices.

On the other hand, among the radars to detect a car and/or a hindrance before a car using one of the radars, a laser radar and a millimeter wave radar are generally known as radars for adaptive cruise control (ACC). Particularly, the millimeter wave radar can capture a target (a reflected item obtained by a radar is also called a target in this specification) in a stable state even under a condition of rain and fog and is hence expected as an all-weather sensor.

The millimeter wave radar sends from a transmission antenna a radio wave of the frequency band, receives a reflected wave from a target such as a vehicle, and detects a Doppler modulation characteristic of a received wave to the transmitted wave to detect distance (range) between the radar and the target and a relative speed or a rate therebetween.

There have been proposed modulation methods for the millimeter wave radar such as a frequency modulation (FM) continuous wave (CW) method and a two-frequency CW method.

Of these methods, the two-frequency CW method transmits two frequencies relatively near to each other through a change-over operation to detect items such as distance (range) between the radar and the target and a rate therebetween by use of a degree of the modulation of received waves of the transmitted waves. Therefore, the method advantageously requires only two oscillation frequencies and hence the circuit configuration of circuits such as an oscillator is simplified.

Moreover, there is a method in the two-frequency CW method in which a reception antenna is disposed at a right position and a left position such that an existence angle (azimuth angle) of a forward target with respect to a radar beam is detected according to a ratio between sum power and difference power obtained from received signals (also called right and left received signals in some cases) from the right and left antennas and/or a phase difference between the right and left received signals. This is generally called a monopulse method.

By using the monopulse method, the target existence angle can be detected by one wide beam without necessitating any scan unit to detect a direction. Since the antenna size is inversely proportional to the beam width, many advantages are obtained, for example, the antenna can be reduced in size.

As above, although the two-frequency CW monopulse millimeter wave radar have various advantages, the radar has been attended with problems to be improved as below when the radar is used to pre-crash safety measurements.

(1) In this method, by employing a technique to conduct a frequency spectrum analysis using a fast Fourier transform (FFT) for a received Doppler modulation signal waveform (of a reflected wave), there is obtained a spectral peak corresponding a target of each rate. Therefore, even when a plurality of targets exist before the radar, the targets can be separated from each other. However, when two or more targets respectively having rates completely equal to each other exist before the radar, the signals from these targets are recognized as one spectrum, and hence these targets cannot be separated from each other.

(2) In principle, when two targets having completely the same speed are captured at the same time by a millimeter wave radar, the positions of the targets in the direction (lateral direction) vertical to the travelling direction of the vehicle are detected as if they are at one position (also called a reflection center-of-gravity position or a reflection central position in this specification) determined by a ratio between values of intensity (reflection intensity) of reflected power from the targets.

Therefore, in a case in which, for example, vehicles at a halt laterally exist in both traffic lanes of a traffic lane (own traffic lane) of a vehicle on which the millimeter wave radar is mounted, when the radar captures the vehicles at the same time, these vehicles are possibly detected as if the vehicles are one block lying in the own traffic lane or as if one vehicle at a halt exist in the own traffic lane in some cases. Therefore, for example, also in a case in which the vehicle passes through a space between vehicles at a halt existing in the right and left traffic lanes or in which a space passable for a car exists before the vehicle and the vehicle can pass through the space by a simple driving operation in safety, there may disadvantageously occur a situation in which an emergency braking operation takes place.

SUMMARY OF THE INVENTION

In a radar, three reception antennas such as first, second, and third reception antennas are disposed to receive reflected wave of a radio wave from an object and a horizontal width of the second reception antenna is less than a horizontal width of each of the first and third reception antennas.

Or, the radar is configured such that an overlap range of overlap between a received beam of the first reception antenna and a received beam of the second reception antenna is equal to or more than a predetermined value and an overlap range of overlap between the received beam of the second reception antenna and a received beam of the third reception antenna is equal to or more than a predetermined value.

When there exist a plurality of targets having substantially the same rate and the same distance (range) with respect to the own vehicle, these targets can be detected as separate items.

## BRIEF DESCRIPTION OF THE DRAWINGS

FIG. 1 is a schematic diagram showing transmission and reception antennas and examples of reception beam patterns according to the present invention.

FIG. 2 is a block diagram showing an example of a configuration of a radar.

FIG. 3 is a diagram showing examples of reception beams according to the present invention.

FIGS. 4A and 4B are graphs showing a principle of the two-frequency CW method.

FIG. 5 is a graph showing three reception antenna patterns.

FIG. 6 is a graph showing a principle of angle measurement in the monopulse method.

FIGS. 7A-7C are diagrams showing effect of a radar according to the present invention.

FIG. 8 is a diagram showing examples of reception beams according to the present invention.

FIGS. 9A-9C are diagrams showing configuration examples of antennas.

FIGS. 10A-10C are diagrams showing configuration examples of antennas.

FIGS. 11A-11C are diagrams showing configuration examples of planar antennas.

FIG. 12 is a flowchart showing signal processing to calculate distance (range), a rate, and an azimuth angle using three reception antennas.

FIG. 13 is a graph showing an FFT waveform of received signals.

FIG. 14 is a block diagram showing an example of a configuration of a radar including two communication interfaces.

FIG. 15 is a diagram showing an antenna configuration including two transmission antennas and patterns of transmission beams.

FIG. 16 is a block diagram showing an example of a configuration of a radar including two transmission antennas and three reception antennas.

FIG. 17 is a graph showing two transmission antenna patterns.

FIG. 18 is a diagram showing an example of influence of a multipath.

## DESCRIPTION OF THE EMBODIMENTS

Next, description will be given of an embodiment according to the present invention.

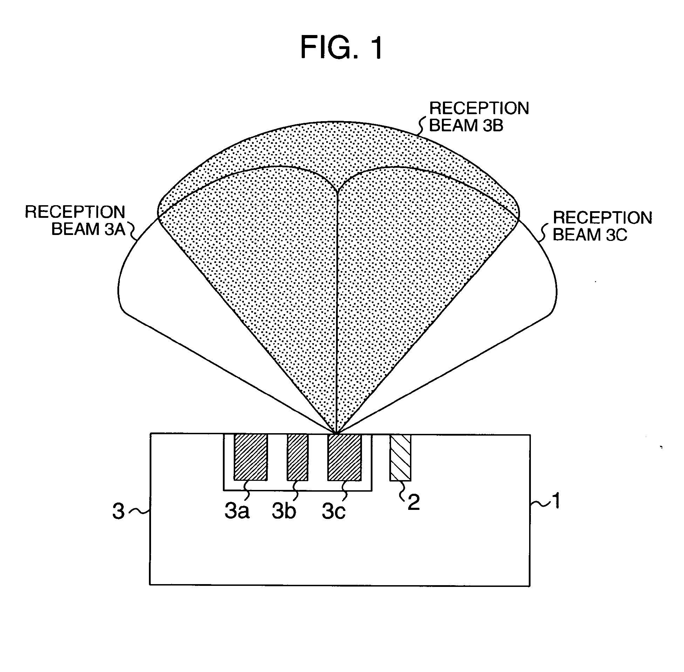

Referring to FIGS. 1 to 14, a first embodiment of the present invention will be described.

FIG. 1 shows an embodiment of a configuration of an antenna section of a radar 1. In the configuration of FIG. 1, the radar 1 radiates light or a radio wave to detect an object to obtain a speed, distance (range), and an angle of the object. The radar 1 includes a transmission antenna 2 and at least three reception antennas 3a, 3b, and 3c.

The light or the radio wave radiated from the antenna 2 propagates through air while expanding at an angle determined mainly by a pattern of the antenna 2. Since intensity thereof attenuates almost according to distance (range) from the antenna 2, it is impossible to deliver a significant signal to a position apart from the transmission antenna 2 by more than a predetermined distance (range). A range in which the radio wave radiated from the antenna 2 reaches with intensity equal to or more than a predetermined value is referred to as a transmission beam hereinbelow. The transmission beam has a pattern and size which are determined by the pattern and power of the transmission antenna 2. Like the transmission antenna 2, a reception antenna also has a range in which signals can be received, the range being referred to as a reception beam. The reception beam has a pattern determined also by the pattern and power of the transmission antenna.

The reception antennas 3a, 3b, and 3c of the embodiment are configured to have reception beam patterns shown in FIG. 1. That is, the reception antenna 3a has a beam pattern as indicated by a reception beam 3A and receives radio waves on the left-hand side viewed from the driver. The reception antenna 3b has a beam pattern as indicated by a reception beam 3B and receives radio waves in a wide range of a central zone, and the reception antenna 3c has a beam pattern as indicated by a reception beam 3C and receives radio waves on the right-hand side viewed from the driver.

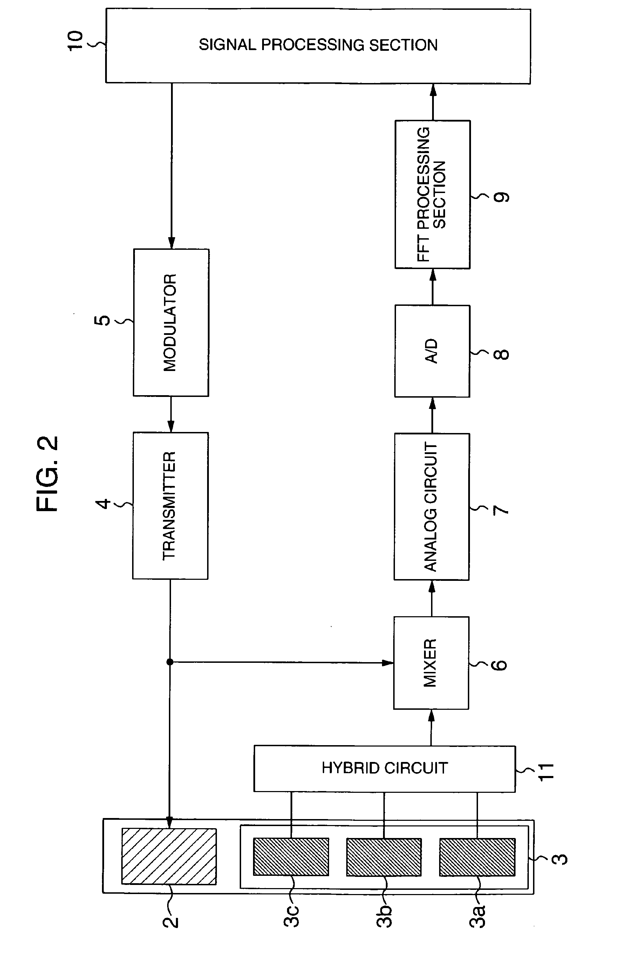

FIG. 2 shows a configuration of the radar 1. The radar 1 includes an antenna section 1a including a transmission antenna 2 and the reception antennas 3a, 3b, and 3c; a transmitter 4, a modulator 5, a mixer 6, an analog circuit 7, an analog-to-digital (A/D) converter 8, an FFT (Fast Fourier Transform) processing section 9, a signal processing section 10, and a hybrid circuit 11.

In the configuration, the transmitter 4 outputs a high-frequency signal in a millimeter wave band according to a modulated signal from the modulator 5. The high-frequency signal is radiated as a transmission signal from the transmission antenna 2. The transmission signal is reflected by an object in an area of the radiation and the reflected signal is received by the reception antennas 3a, 3b, and 3c.

In this situation, the hybrid circuit 11 first conducts an addition and a subtraction using received signals respectively of the reception antennas 3a and 3b to create a sum signal (SumAB) and a difference signal (DiffAB). Similarly, the hybrid circuit 11 conducts an addition and a subtraction using received signals respectively of the reception antennas 3b and 3c to create a sum signal (SumBC) and a difference signal (DiffBC).

Next, the mixer 6 conducts a frequency conversion using the sum and difference signals and the signals received by the reception antennas 3a, 3b, and 3c. The mixer 6 is also supplied with the transmission signal from the transmitter 4 and mixes the transmission signal with the received signal to create a low-frequency signal and outputs the signal to the analog circuit 7. A difference (Doppler shift) between the frequency of the transmission signal and that of the received signal due to existence of the object is reflected in the low-frequency signal. The analog circuit 7 amplifies the signal inputted thereto and outputs the resultant signal to the A/D converter 8. The converter 8 converts the input signal into a digital signal to supply the signal to the FFT processing section 9. The section 9 measures the frequency spectrum of the signal through a fast Fourier transform (FFT) to obtain information of amplitude and phases and sends the information to the signal processing section 10. The section 10 calculates distance (range) and a rate using data in the frequency zone obtained by the FFT processing section 9 and outputs a measured distance (range) value and a measured rate value.

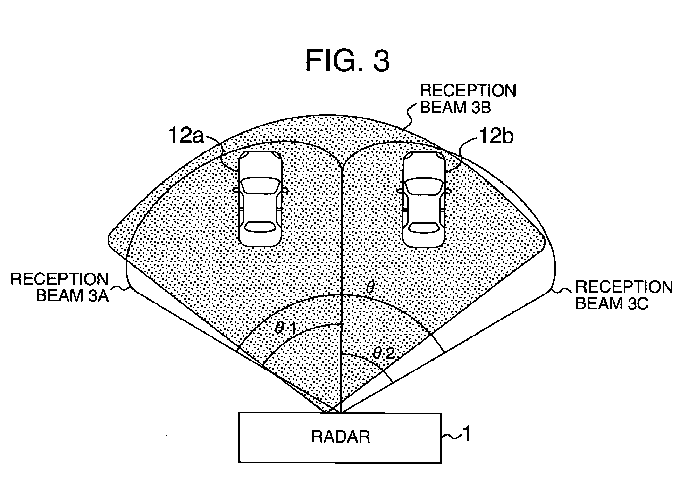

Referring now to FIGS. 3 to 5, description will be given in detail of signal processing in an embodiment using the two-frequency continuous wave (CW) method according to the present invention. In a method of measuring a rate of an object using a frequency difference (Doppler shift) between a transmission signal and a received signal due to a rate between a detection object and a radar, the two-frequency CW method is a method in which the transmission signal has two frequencies, not a single frequency, and in which the frequencies are alternately changed at a predetermined interval of time.

Even for objects respectively having rates substantially equal to each other, when the frequency of the transmission signal varies, there also occur a change in the phase shift according to distance (range) from the radar. The two-frequency CW method is a method using this characteristic in which by changing the frequency of the transmission signal, the distance (range) to the object is measured using phase information of received signals for the respective frequencies.

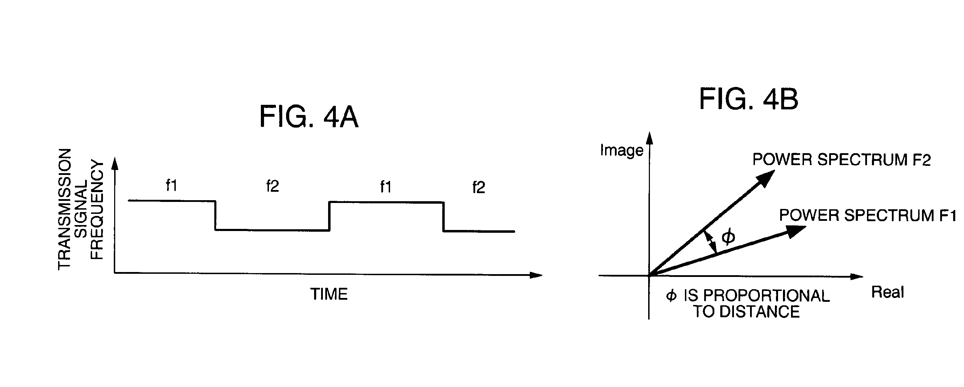

In a radar of the two-frequency CW method, a modulated signal is inputted to the transmitter 4 to transmit signals by changing the frequency between f1 and f2 at an interval of time as shown in FIG. 4A. when a vehicle 12b exists, for example, at a position shown in FIG. 3, a radio wave sent from the transmission antenna 2 is reflected by the vehicle 12b before the radar. The reflected signals are then received by the reception antennas 3b and 3c. In this situation, since the vehicle 12b is outside the reception beam of the reception antenna 3a, the antenna 3a does not receive the reflected signal from the vehicle 12b. Thereafter, the mixer 6 mixes the received signals of the reception antennas 3b and 3c with a signal from the transmitter 4 to obtain a beat signal. In a homodyne detection to directly convert a signal into a baseband signal, the beat signal outputted from the mixer 6 indicates the Doppler frequency, which is expressed as follows.

[Expression 1]

$$f_d = \frac{2 \cdot f_c}{c} R'$$

In the expression, fc is a transmission frequency, R' is a rate, and c is the speed of light. On the reception side, the analog circuit section 7 separates and demodulates a received signal for each transmission frequency, and then the A/D converter 8 conducts an A/D conversion for the received signal of each transmission frequency. The FFT processing section 9 executes fast Fourier transform processing for digital sample data obtained through the A/D conversion to attain a frequency spectrum in the overall frequency band of the received beat signal. According to the principle of the two-frequency CW method, power spectra of peak signals respectively of the transmission frequencies f1 and f2 are measured as shown in FIG. 4B using the peak signal obtained as a result of the FFT processing. The distance (range) is calculated from the phase difference φ between two power spectra using the following expression.

[Expression 2]

$$range = \frac{c \cdot \phi}{4\pi \cdot \Delta f}$$

$$\Delta f = f2 \cdot f1$$

As above, not only the rate of the target but also the distance (range) to the target can be calculated.

Referring next to FIG. 3, description will be given of an example of a method of measuring an azimuth angle of existence of the target in addition to the rate and the distance (range) with respect to the target.

FIG. 3 shows a schematic diagram showing a state of a radar mounted on a vehicle in which the radar is viewed from an upper side of the vehicle. As shown in FIG. 3, the reception antennas 3a, 3b, and 3c are arranged as below. That is, a central line of the reception beam 3A of the reception antenna 3a is installed with an offset toward the left-hand side relative to a central line of the reception beam 3B of the reception antenna 3b and a central line of the reception beam 3C of the reception antenna 3c is installed with an offset toward the right-hand side relative to the central line of the reception beam 3B of the reception antenna 3b.

In FIG. 3, the reception beam 3A is a range to cover a left-hand front area by an angle of θ1. Concretely, θ1 is desirably equal to or more than 50°.

Similarly, the reception beam 3C is a range to cover a right-hand front area by an angle of θ2. Concretely, θ2 is desirably equal to or more than 50°. The reception beam 3B is a range to cover an area by a wide angle of θ2 more than θ1 and θ2. Concretely, θ is desirably equal to or more than 100°.

In this case, the reception antennas 3a, 3b, and 3c are set such that the reception beam 3A overlaps with the reception beam 3B by a predetermined angle Xa and the reception beam 3B overlaps with the reception beam 3C by a predetermined angle Xb. Concretely, Xa and Xb are desirably equal to or more than 50%.

In the range in which the reception beams of two reception antennas overlap with each other as above, an azimuth angle of a target can be attained using a difference between received signals from the two reception antennas.

In the reception beam patterns of the present invention, the overlapped areas are separated to be on the right-hand and left-hand sides, and hence the vehicles 12a and 12b can be separately detected. That is, the vehicle 12a is detected by the reception antennas 3a and 3b, but is not detected by the reception antenna c. The vehicle 12b is detected by the reception antennas 3b and 3c, but is not detected by the reception antenna a. Therefore, even when the vehicles 12a and 12b have the same rate and the same distance (range) with respect to the own vehicle, the vehicles can be separately detected. This suppresses the detection of the conventional radar in which the vehicles 12a and 12b are detected as one block or in which a wrong azimuth angle is detected. FIG. 3 shows examples of reception beam patterns when θ is about 100° and θ1 and θ2 are about 60°.

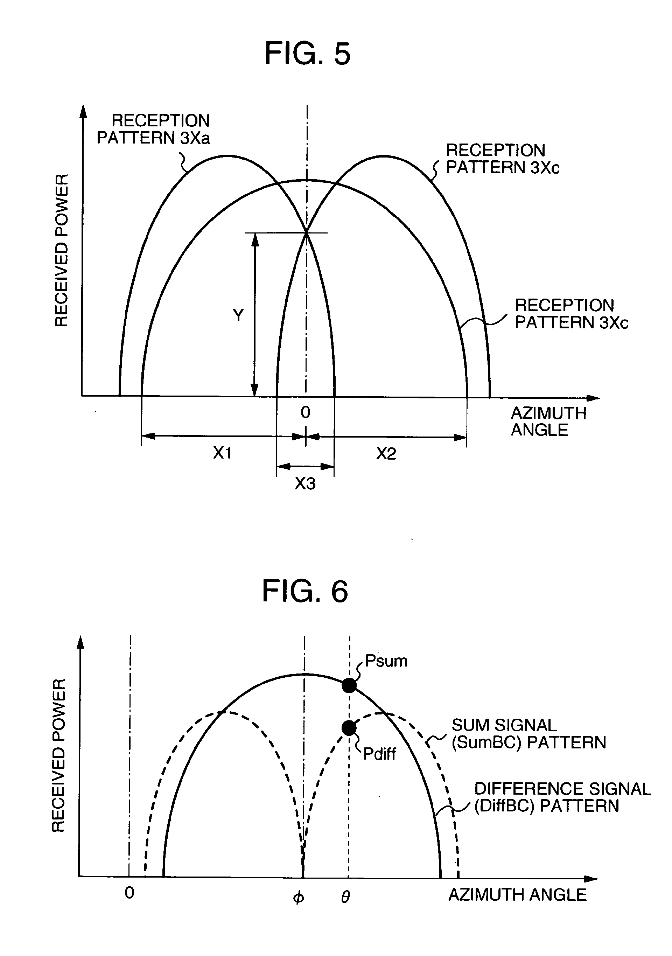

FIG. 5 shows received power patterns respectively of the reception antennas 3a, 3b, and 3c. Each reception beam has a range implemented by the configuration of the antennas in which reception patterns of FIG. 5 overlap with each other by a predetermined value X1 or X2 in the angular direction.

FIG. 5 shows an example in which X1 and X2 are set such that the azimuth angle satisfied by each of the reception patterns 3Xa and 3Xc overlaps with 50% of the reception pattern 3Xb. In this situation, the overlap X3 is desirably small for the reception patterns 3Xa and 3Xc, and it is desirable that the reception patterns are set such that received power Y for the overlapped area X3 is, for example, 20 decibel (dB) or less.

Referring to FIG. 6, description will be given of a method of identifying an azimuth angle θ of an object 12b using the sum signal (SumAB) and the difference signal (DiffAB) of the signals received by the reception antennas 3a and 3b and the sum signal (SumBC) and the difference signal (DiffBC) of the signals received by the reception antennas 3b and 3c, the signals being generated by the hybrid circuit 11.

FIG. 6 shows patterns of the sum signal (SumBC) and the difference signal (DiffBC) of the received signals in the right-hand range of the center of the radar. Since the patterns of the sum and difference signals are fixed as shown in FIG. 6, when the target is on the right-hand side viewed from the antenna attaching position like the vehicle 12b, the sum signal (SumBC) and the difference signal (DiffBC) of the signals inputted to the reception antennas 3b and 3c are calculated to identify the azimuth angle θ using a ratio in power between the received signals. Similarly, when the target is on the left-hand side viewed from the antenna attaching position like the vehicle 12a, the sum signal (SumAB) and the difference signal (DiffAB) of the signals inputted to the reception antennas 3a and 3b are calculated to identify the azimuth angle θ using a ratio in power between the received signals.

As above, a wide range detection is possible by one radar. Not only the distance (range) and the rate of the detection object, but also the azimuth can be detected. This consequently improves object detection precision. Additionally, an object on the left-hand side and an object on the right-hand side are separately detected according to the present embodiment. Therefore, in a scene in which one vehicle is at halt on the right-hand side and another vehicle is at halt on the left-hand side before the own vehicle, the vehicles on both sides can be separately detected. Since a moving section as in the scan radar is not required according to the present embodiment, the radar can be further reduced in size.

By using the radar described above, it is possible to improve quality in control of distance (range) between cars and control for crash mitigation.

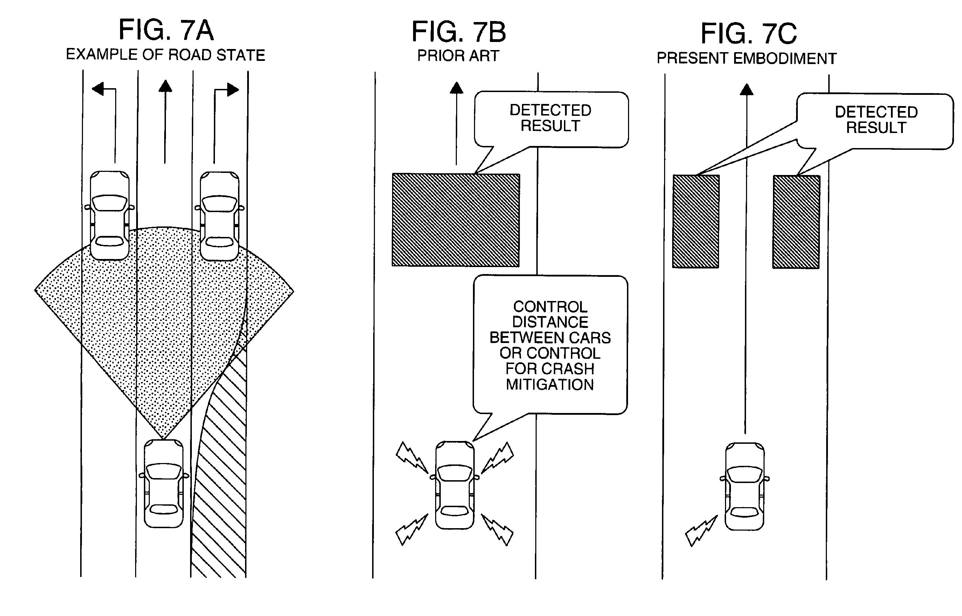

For example, as can be seen from FIG. 7A, when the own vehicle is travelling on a straight traffic lane before an intersection and a vehicle is at a halt on a traffic lane (right-turn lane) on the right of the straight traffic lane and another vehicle is at a halt on a traffic lane (left-turn lane) on the left of the straight traffic lane, if a conventional radar is used, the vehicles on the right-hand and left-hand sides are detected as one block as shown in FIG. 7B and hence the detection is conducted as if a hindrance exists before the own vehicle. Therefore, the vehicle speed is reduced when control of distance (range) between cars is effective and an emergency brake and a seat belt rewind unit operate when control for crash mitigation is effective. In a road state shown in FIG. 7A, the driver ordinarily considers that the control of distance (range) between cars and the control for crash mitigation do not operate, and hence determines that the own vehicle can pass through the place without any trouble. Therefore, the driver does not predict that the own vehicle is braked. In consequence, if the control of distance (range) between cars or the control for crash mitigation operates, the driver have an uncomfortable feeling as well as the driver is set to a dangerous situation in some cases.

In contrast thereto, since the vehicles existing on the right-side traffic lane (right-turn lane) and on the left-hand traffic lane (left-turn lane) are detected as shown in FIG. 7C according to the radar of the present invention, the own vehicle can path through the space between the vehicles. In this situation, when the speed of the own vehicle is more than a predetermined speed, it is also possible to conduct control of reducing the speed to a predetermined speed to pass through the space. Therefore, by using the radar of the present invention, there can be implemented vehicle travelling control satisfying expectation of the driver.

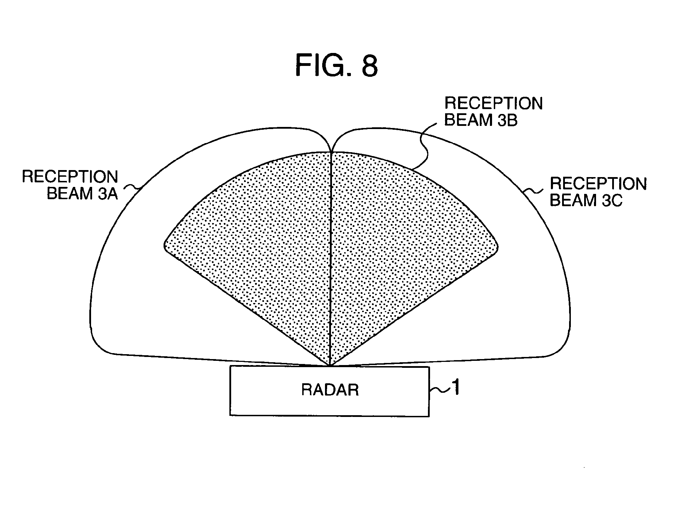

Although θ is about 100° and θ1 and θ2 are about 60° in FIG. 3, it is also possible to increase θ1 and θ2 to about 90° for θ = about 100° as shown in FIG. 8. This makes it possible to enlarge the area for one radar to detect objects before the vehicle on which the radar is mounted. Therefore, the radar can be favorably used as a device to detect objects for crash mitigation when another car is entering a space before the own vehicle or when the own vehicle suddenly meets another vehicle. In this case, in an area in which two reception beams overlap with each other as indicated by a shaded zone in FIG. 8, the distance (range) and the rate are calculated in association with the angle detecting function in the above method. In the other areas of the reception beams a and c, the distance (range) and the rate of the target are calculated.

Next, description will be given of an embodiment of an antenna section and a radome 13 according to the present invention.

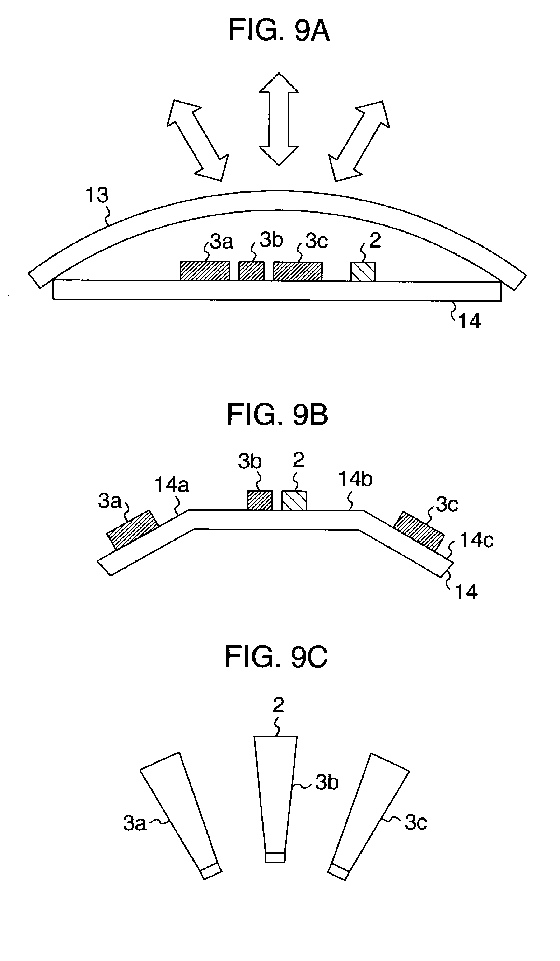

FIG. 9 is a diagram showing a configuration of the antenna section viewed from a lateral direction with respect to the transmission and reception surfaces of the antenna. The radar is attached onto a vehicle such that the side shown in FIG. 9 is an upper side and the transmission and reception surfaces of the antenna face the front side of the vehicle.

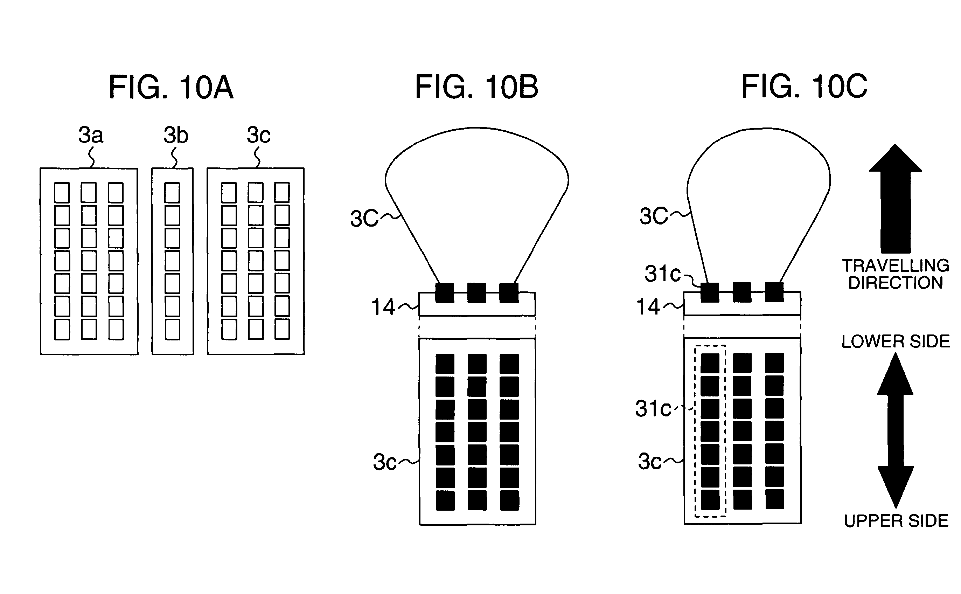

FIG. 9A shows an example in which planar antennas are adopted as transmission and reception antennas. One transmission antenna 2 and three reception antennas 3a, 3b, and 3c are horizontally arranged to be installed onto a holding member 14 with directivity such that reception beams of the reception antennas 3a and 3c respectively have an offset on the right and left sides with respect to a reception beam of the reception antenna 3b. Since width of each of the transmission and reception beams is almost inversely proportional to horizontal width of the associated antenna, in order to implement the reception beam pattern shown, for example, in FIG. 3, it is required that the horizontal width of each of the reception antennas 3a and 3c is larger than that of the reception antenna 3b. Also, as a unit to dispose the offset on the right and left sides of the reception beams, there may be used a configuration in which the reception antenna holding member 14 is inclined in the right-hand and left-hand portions thereof, which will be described later. However, as shown in FIG. 10A, there may also be used a configuration in which each of the reception antennas 3a, 3b, and 3c includes an array of small antennas such that received power of each small antenna is varied according to a reception beam pattern to be formed.

When each small antenna of the reception antenna 3c has, for example, the same received power as shown in FIG. 10B, a reception beam can be formed without any offset on the right and left sides. On the other hand, as shown in FIG. 10C, when the received power of the small antennas in, for example, at least the rightmost column 31a is lower than that of the other small antennas of the reception antenna 3c, the reception beam 3C has an offset toward the right-hand side viewed from the driver.

Although the transmission antenna 2 is disposed on the right side and the reception antennas 3a, 3b, and 3c are arranged on the left side in the embodiment, it is also possible to dispose the transmission antenna 2 on the left side and the reception antennas 3a, 3b, and 3c on the right side.

When a radio wave sent from the transmission antenna 2 is reflected by the radome 13 to be received by the reception antennas 3a, 3b, and 3c, radio wave interference takes place. To prevent the interference, it is desirable that the radome 13 has a contour having a curvature and a radio wave absorber is disposed at positions at which radio wave interference possibly occurs. The positions are, for example, a position between the transmission antenna and the reception antenna and a position near an attaching section 14b between the radome 13 and the holding member 14. Although radio wave interference may occur at other positions, it is particularly probable that the interference takes place at the above positions. Therefore, occurrence of radio wave interference can be suppressed by disposing a radio wave absorber at these positions.

The curvature of the radome 13 is desirably set such that the radio wave radiated from the transmission antenna 2 possibly enters a tangential plane of the radome with a right angle relative to the plane at the incident point.

When the radio wave vertically enters the radome 13, intensity of the radio wave reflected by the radome 13 can be reduced by appropriately selecting thickness and a material of the radome 13 in association with a wavelength of the radio wave. However, when the radio wave enters the radome 13 with an angle other than a right angle, intensity of the reflected radio wave cannot be sufficiently reduced according to the thickness and the material of the radome 13.

In this situation, by configuring the radome 13 in a contour having a curvature as shown in FIG. 9A, the radio wave radiated from the transmission antenna 2 can enter the radome 13 with an angle similar to a right angle, and hence the radio wave interference can be reduced. Although the curvature is shown only in the horizontal direction of the radome in FIG. 9A, the radio wave interference can be efficiently reduced in a configuration in which the radome has a curvature also in the vertical direction thereof.

FIG. 9B shows an embodiment in which the holding member 14 includes three surfaces. In this case, the transmission antenna 2 and the reception antenna 3b are arranged on a central surface 14b, the reception antenna 3a is arranged on a left surface 14a, and the reception antenna 3c is arranged on a right surface 14c to form patterns of the reception beams 3A, 3B, and 3C as shown in FIG. 3.

FIG. 9C shows a case using horn antennas disposed to respectively face the left side, the front side, and the right side. Using the antennas, the radar is simplified in the configuration and can be easily constructed. The radio wave interference between the respective antennas can also be easily prevented.

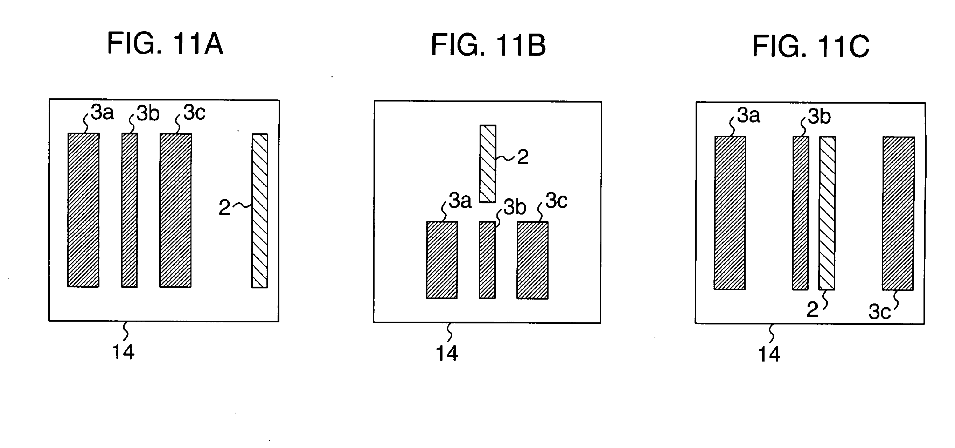

FIG. 11 is a diagram showing layouts of the transmission antenna 2 and three reception antennas 3a, 3b, and 3c on the holding member 14 when the radar is mounted on the vehicle, the layouts being viewed from the front side of the vehicle.

FIG. 11A shows an example using planar antennas as in FIG. 9A in which the transmission antenna 2 and the reception antennas 3a, 3b, and 3c are arranged in parallel to each other.

FIG. 11B shows an example of a configuration of the antenna section as shown in FIG. 9A or 9B in which the transmission antenna 2 and the reception antennas 3a, 3b, and 3c are vertically arranged. In the configuration, since three reception antennas 3a, 3b, and 3c are arranged in parallel to each other, wiring is efficiently conducted in consideration of connection to the hybrid circuit 11. The central line of the transmission beam of the transmission antenna 2 is substantially aligned with that of the reception beam 3B of the central reception antenna 3b and the offset is not required to be considered, and hence processing of computation can be simplified.

FIG. 11C shows an example in which the transmission antenna 2 and the central reception antenna 3b are arranged in parallel to each other and the reception antennas 3a and 3c are arranged on both sides. In this configuration, it is required that the transmission antenna 2 and the reception antenna 3b have a transmission beam and a reception beam with a wider angle than the angles of the reception beams of the reception antennas 3a and 3c. However, as already described above, since the horizontal width of the antenna is substantially inversely proportional to the angle of the beam of the antenna, the horizontal width of each of the transmission antenna 2 and the reception antenna 3b is ordinarily narrower than that of each of the reception antennas 3a and 3c. Therefore, by arranging the transmission antenna 2 and the reception antenna 3b having the narrower horizontal width side by side in the central position as shown in FIG. 11C, the overall antenna size can be reduced.

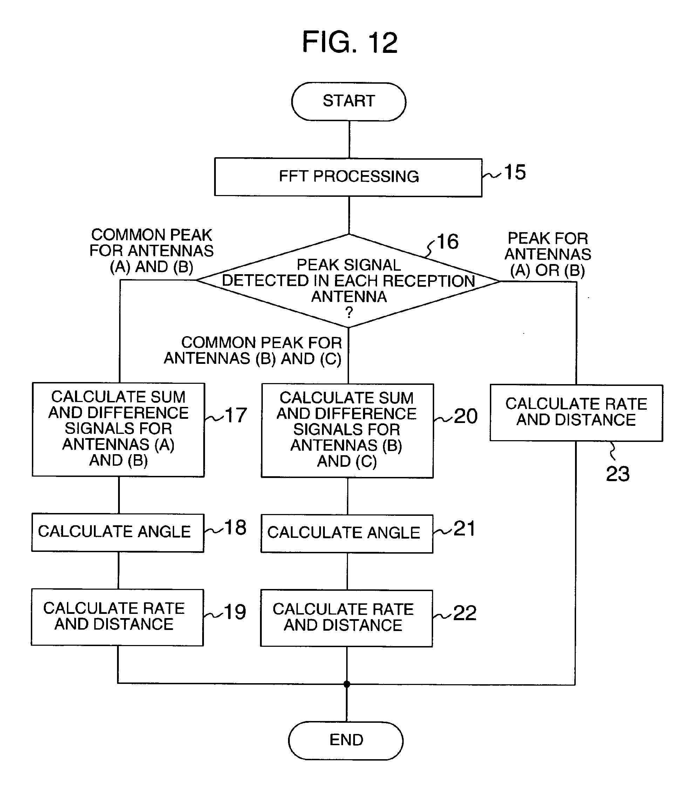

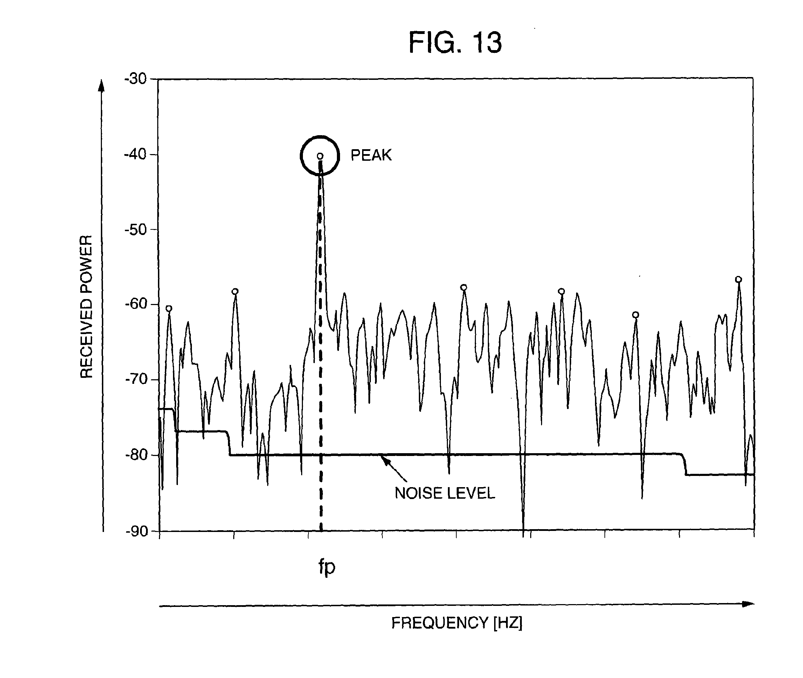

Referring next to the flowchart shown in FIG. 12 and FIG. 13, description will be given of processing of the embodiment of the radar to detect the rate, the distance (range), and the azimuth angle of a detection object. First, for each signal received by the reception antennas 3a, 3b, and 3c, the FFT processing is executed in step 15. FIG. 13 shows results of the FFT processing executed for signals received by one reception antenna. In step 16, a peak signal is detected for each FFT signal. The peak signal is a signal of which the value of received power exceeds a threshold value (noise level) in FIG. 13. Between the peak signals detected from the antennas, the values of a Doppler frequency fp are compared with each other. If the Doppler frequency of the signal received by the antenna 3a matches that of the signal received by the antenna 3b (i.e., the difference with respect to fp is substantially equal to or less than a predetermined value), control goes to step 17. In this case, since the received signal of the same target is obtained by two reception antennas (3a and 3b), the sum and difference signals are calculated in step 17 and then angle detection is conducted in step 18. The rate and the distance (range) are calculated in step 19. Similarly, if the Doppler frequency of the signal received by the reception antenna 3b matches that of the signal received by the reception antenna 3c in step 16, control goes to step 20. In this case, since the received signal of the same target is obtained by two reception antennas (3b and 3c), the sum and difference signals are calculated in step 20 and then angle detection is conducted in step 21. The rate and the distance (range) are calculated in step 22. If the peak of the received signal is obtained only by one of the reception antennas 3a, 3b, and 3c in step 16, it is indicated in this case that the target is detected in an area in which the antenna beams do not overlap with each other in FIG. 1 and hence control goes to step 23. In step 23, the rate and the distance (range) are calculated, but the azimuth angle is not calculated. In this operation, as an output value of the azimuth angle, a predetermined value indicating impossibility of angle detection is outputted. It is therefore possible to notify to the controller using the output from the radar that this is resultant from the target position, not from failure or the like. The particular value indicating impossibility of angle detection in this case is, for example, 100 [deg] which is not ordinarily outputted in consideration of the installed state of the reception antennas 3a, 3b, and 3c.

As above, since the received signal from each reception antenna is first measured, it is possible to detect that the target exists on the right-hand side or the left-hand side. In this situation, when the reception antennas are employed as in the above example in which $\theta$ = about $100°$ and $\theta1$ and $\theta2$ = about $60°$, the target is detected by the antenna 3b in any situation. That is, the azimuth angle can be detected in any case. To detect the distance (range) and the azimuth angle in the overall detection area as in this example, at least five signal lines are required.

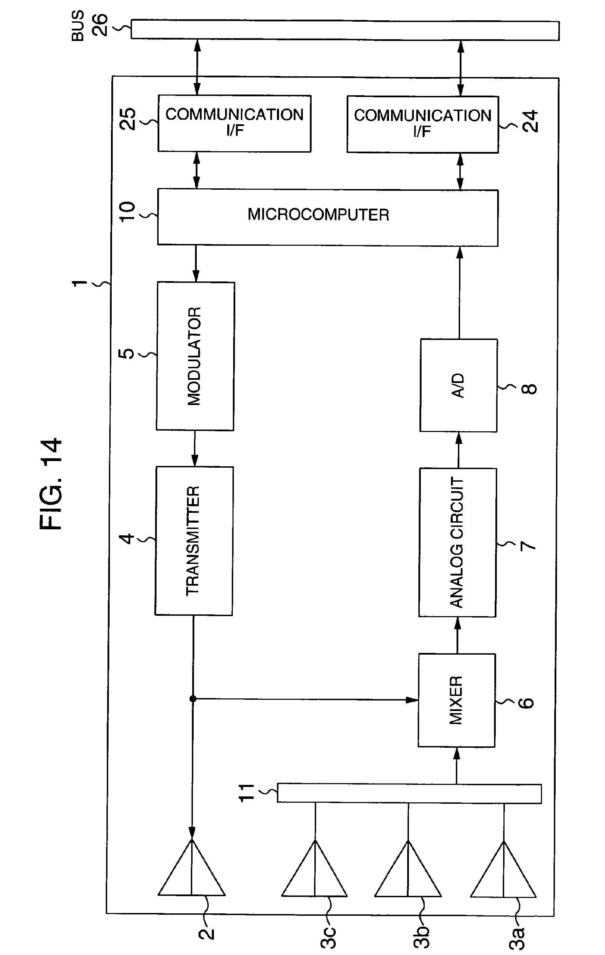

Next, description will be given of a self-diagnosis function of the radar 1 by referring to FIG. 14. To communicate with another unit in the own vehicle, the radar 1 includes two communication interfaces (I/F) connected to a bus 26. The communication interface 24 is an interface to output information of the distance (range), the rate, and the azimuth angle as information of a target detected by the radar 1. The communication interface 25 is an interface to output information from the self-diagnosis function of the radar 1.

Description will next be given of a method of detecting failure in the reception antennas. To execute the FFT processing for each reception antenna in step 15 of FIG. 12, the noise level is calculated as shown in FIG. 13.

When the change in time of the noise level is not detected for the received signal of either one of the reception antennas 3a, 3b, and 3c and the peak fp shown in FIG. 13 is not obtained in step 16, occurrence of failure is assumed in the reception antenna 3a, 3b, or 3c and the angle detection is assumed to be impossible, and only the distance (range) is detected. In this situation, by outputting a particular value indicating failure as an output of the angle, the failure of the associated radar can be notified to the controller using the output from the radar. The particular value indicating the failure is an angle such as 100 [deg] which is not ordinarily outputted in consideration of the installed state of the reception antennas 3a, 3b, and 3c.

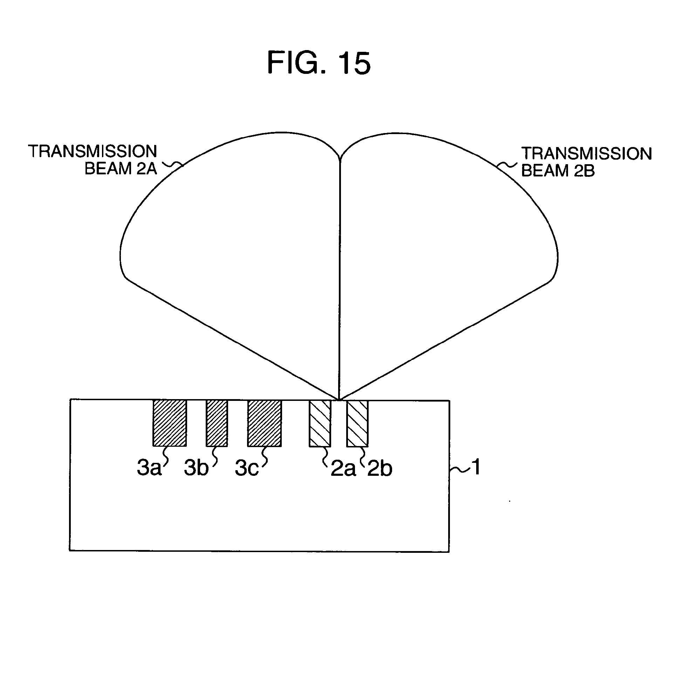

Referring to FIGS. 15 to 18, description will be given of a second embodiment according to the present invention.

FIG. 15 shows a configuration and patterns of transmission beams from the antenna section of the radar 1 in the embodiment. The antenna section includes two transmission antennas 2a and 2b and three reception antennas 3a, 3b, and 3c. The transmission antenna 2a has a beam pattern as indicated by a transmission beam 2A and sends radio waves in an area on the left-hand side viewed from the driver. The transmission antenna 2b has a beam pattern as indicated by a transmission beam 2B and sends radio waves in an area on the right-hand side viewed from the driver.

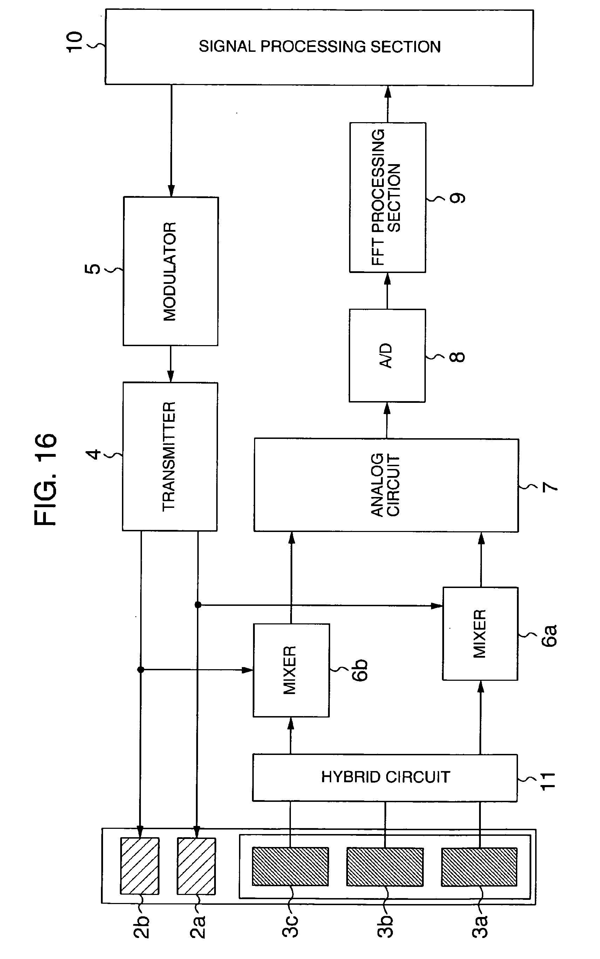

Referring now to FIG. 16, description will be given of a configuration of the radar 1 in the embodiment. The antenna section includes transmission antennas 2a and 2b and reception antennas 3a, 3b, and 3c. The transmission antennas 2a and 3b radiate high-frequency signals in a millimeter wave band sent from the transmitter 4 with a transmission frequency according to a modulated signal from a modulator 5. A radio wave signal reflected by an object in an area of the radiation is received by the reception antennas 3a, 3b, and 3c. The sum and difference signals are generated using the signals received by the reception antennas 3a and 3b and the sum and difference signals are generated using the signals received by the reception antennas 3b and 3c in a hybrid circuit 11. A frequency conversion is conducted for the resultant signals and the signals received by the respective reception antennas 3a, 3b, and 3c in mixers 6a and 6b. The mixers 6a and 6b are also supplied with signals from the transmitter 4. A low-frequency signal obtained by mixing the signals with the above signals is outputted to an analog circuit 7.

In FIG. 15, the transmission beam 2A is a range to cover the left-side area with an angle θ1; concretely, θ1 is desirably equal to or more than 50°. Similarly, the transmission beam 2B is a range to cover the right-side area with an angle θ2; concretely, θ2 is desirably equal to or more than 50°.

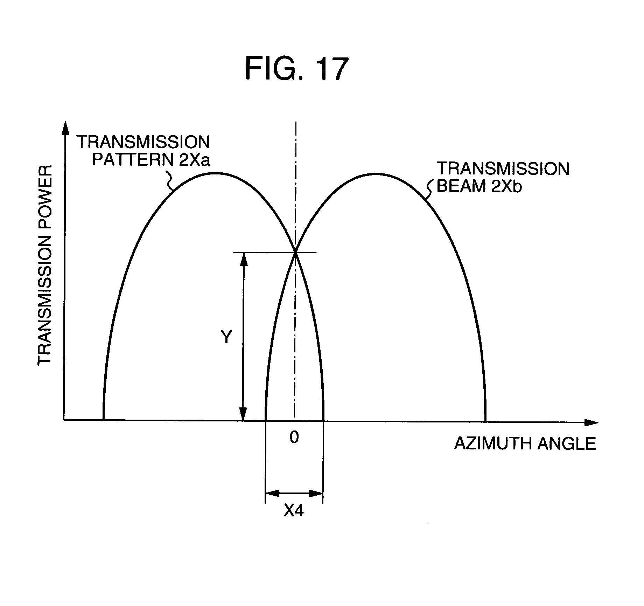

FIG. 17 shows transmission power patterns respectively of the transmission antennas 2a and 2b. To implement the ranges of the transmission beams, it is desirable that the transmission patterns 2Xa and 2Xb overlap with each other with a small overlapped area therebetween in FIG. 17. This can be implemented by the transmission patterns in which received power Y for an azimuth angle X4 of the overlapped area is equal to or less than 20 dB.

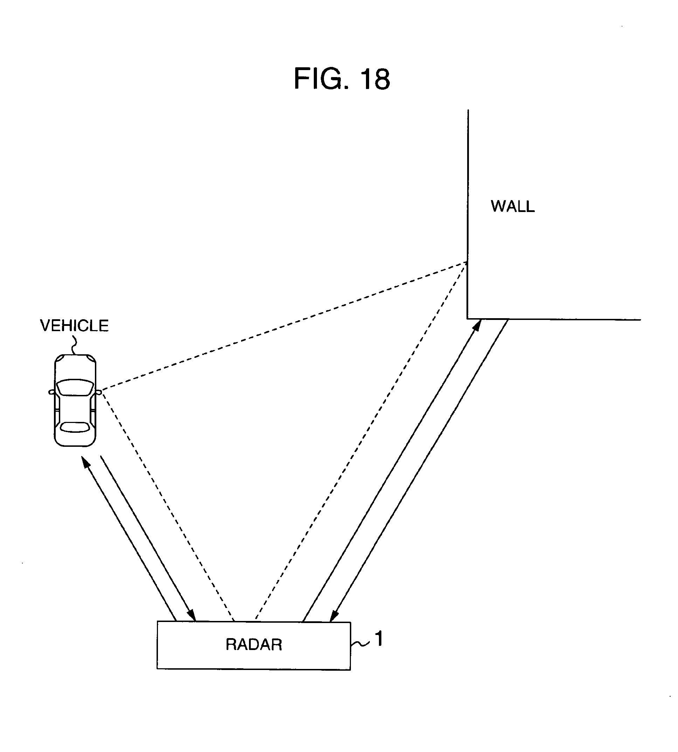

FIG. 18 shows a scene in which a target such as a vehicle to be detected exists on the left-hand side and an object such as a wall which remarkably reflects radio waves exists on the right-hand side. As indicated by solid straight lines in FIG. 18, when signal processing is executed by receiving a reflected wave from the target on the left side, it is possible to obtain a detection result of a target to be inherently detected. However, when a reflected wave returned through a path indicated by dotted lines is received, the result of the detection also indicates that an object exists on the right side, and hence there arises a problem of a multipath. To overcome this difficulty, mutually different transmission radio waves are respectively transmitted to the right-side and left-side areas as in the embodiment. In a radar having a central frequency of, for example, 76.5 gigaherz (GHz), two kinds of transmission frequencies are transmitted such that the frequency difference between the transmission radio waves on the right and left sides is equal to or more than one gigaherz. As a result, the targets to be detected on the right and left sides can be detected using the respective transmission radio waves, and hence this is effective to solve the multipath problem.

By transmitting the transmission radio waves in a timeshared way, it is possible to reduce the number of mixers by one, and hence this is effective to implement a small-sized radar.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A vehicle-mounted radar, comprising:

   a transmission antenna (2) for radiating a radio wave; and
   three antennas including first, second, and third reception antennas (3a, 3b, 3c) for receiving reflected wave of the radio wave from an object,

   wherein
   a horizontal width of the second reception antenna is less than a horizontal width of each of the first and third reception antennas.

2. A vehicle-mounted radar according to claim 1, wherein:

   an azimuth angle between a radio wave radiation direction of the first reception antenna and a radio wave radiation direction of the second reception antenna is equal to or more than a predetermined value; and
   an azimuth angle between a radio wave radiation direction of the third reception antenna and the radio wave radiation direction of the second reception antenna is equal to or more than a predetermined value.

3. A vehicle-mounted radar according to claims 1 or 2, further comprising three antenna installing surfaces (14a, 14b, 14c) including right, central, and left antenna installing surfaces, wherein central antenna installing surface, and the first and third reception antennas are respectively installed on the right and left installing surfaces.

4. A vehicle-mounted radar according to at least one of claims 1 to 3, wherein each of the reception antennas is a horn antenna (FIG. 9C).

5. A vehicle-mounted radar according to at least one of claims 1 to 4, wherein:

   each of at least the first and third reception antennas includes a plurality of rows of small antennas (FIG. 10A); and
   received power of a first one of the small antenna rows nearest to the second reception antenna is less than received power of a second one of the small antenna rows farthest to the second reception antenna.

6. A vehicle-mounted radar according to at least one of claims 1 to 5, wherein the first, second, and third reception antennas are arranged in a horizontal direction, and the transmission antenna is arranged above or below the second reception antenna (FIG. 11B).

7. A vehicle-mounted radar according to at least one of claims 1 to 6, wherein the second reception antenna and the transmission antenna are arranged between the first and third reception antennas (FIG. 9B, FIG. 11B, FIG. 11C).

8. A vehicle-mounted radar according to at least one of claims 1 to 7, wherein a radome has a curvature corresponding to an azimuth angle of a radio wave transmitted therefrom (FIG. 9A).

9. A vehicle-mounted radar according to at least one of claims 1 to 8, wherein the radar conducts an angle detection to detect an angle when at least two reception antennas selected from the reception antennas obtain peak signals substantially equal to each other (FIG. 12, FIG. 13).

10. A vehicle-mounted radar according to at least one of claims 1 to 9, wherein when the angle detection is not conducted, a predetermined value indicating impossibility of the angle detection is set as an output value of the angle (FIG. 10).

11. A vehicle-mounted radar according to at least one of claims 1 to 10, wherein:

    failure of each of the first, second, and the third reception antennas is detected by a change in time of a noise level and disappearance of a peak signal; and
    when failure is detected in at least one of the reception antennas, a predetermined value indicating the failure is set as an output value of the angle (FIG. 13).

12. A vehicle-mounted radar, comprising:

    a transmission antenna (2) for radiating a radio wave; and
    first, second, and third reception antennas (3a, 3b, 3c) for receiving reflected wave of the radio wave from an object, wherein:

    an overlap range of overlap between a received beam of the second reception antenna is equal to or more than a predetermined value; and
    an overlap range of overlap between the received beam of the second reception antenna and a received beam of the third reception antenna is equal to or more than a predetermined value.

13. A vehicle-mounted radar according to claim 12, wherein an overlap range of overlap between the received beam of the first reception antenna and the received beam of the third reception antenna is equal to or less than a predetermined value.

**14.** A vehicle-mounted radar according to claim 12 or 13, wherein a radome has a curvature corresponding to an azimuth angle of a radio wave transmitted therefrom (FIG. 9A).

**15.** A vehicle-mounted radar according to at least one of claims 12 to 14, further comprising an angle detecting function to detect an azimuth angle in the overlap range of overlap between the received beam of the first reception antenna and the received beam of the second reception antenna and the overlap range of overlap between the received beam of the second reception antenna and the received beam of the third reception antenna.

**16.** A vehicle-mounted radar according to at least one of claims 12 to 15, wherein:

the transmission antenna comprises two transmission antennas including first and second transmission antennas; and
an overlap range of overlap between a transmitted beam of the first transmission antenna and a transmitted beam of the second transmission antenna is equal to or less than a predetermined value.

**17.** A vehicle-mounted radar according to at least one of claims 12 to 16, wherein transmission processing of the first transmission antenna and transmission processing of the second transmission antenna are conducted in a time-shared fashion.

**18.** A vehicle-mounted radar according to at least one of claims 12 to 17, wherein a difference between a transmission frequency of the first transmission antenna and a transmission frequency of the second transmission antenna is equal to or more than a predetermined value.

**19.** A drive control apparatus for use in a vehicle in which a vehicle-mounted radar is mounted, the radar comprising a transmission antenna (2) for radiating a radio wave, first, second, and third reception antennas (3a, 3b, 3c) for receiving reflected wave of the radio wave from an object, and a horizontal width of the second reception antenna is less than a horizontal width of each of the first and third reception antennas, wherein
a speed of the vehicle is reduced to a predetermined speed when a hindrance is detected in traffic lanes on both sides of a traffic lane of the vehicle on which the radar is installed and any hindrance is not detected in the traffic lane of the vehicle (FIG.

12).

# FIG. 1

RECEPTION
BEAM 3B

RECEPTION
BEAM 3A

RECEPTION
BEAM 3C

3 ~

3a  3b  3c

~2

~1

FIG. 2

# FIG. 3

RECEPTION BEAM 3B

12a

12b

RECEPTION BEAM 3A

RECEPTION BEAM 3C

$\theta$

$\theta 1$

$\theta 2$

RADAR ~1

## FIG. 4A

TRANSMISSION SIGNAL FREQUENCY

f1    f2    f1    f2

TIME

## FIG. 4B

Image

POWER SPECTRUM F2

POWER SPECTRUM F1

$\phi$

$\phi$ IS PROPORTIONAL TO DISTANCE

Real

EP 1 548 458 A2

## FIG. 5

## FIG. 6

## FIG. 7A
### EXAMPLE OF ROAD STATE

## FIG. 7B
### PRIOR ART

DETECTED RESULT

CONTROL DISTANCE BETWEEN CARS OR CONTROL FOR CRASH MITIGATION

## FIG. 7C
### PRESENT EMBODIMENT

DETECTED RESULT

EP 1 548 458 A2

# FIG. 8

RECEPTION
BEAM 3B

RECEPTION
BEAM 3A

RECEPTION
BEAM 3C

RADAR ～1

## FIG. 9A

13

3a 3b 3c 2

14

## FIG. 9B

3b 2

3a 14a 14b 3c

14c

14

## FIG. 9C

2

3b

3a 3c

# FIG. 10A

3a  3b  3c

# FIG. 10B

3C

14

3c

# FIG. 10C

3C

31c

14

31c

3c

TRAVELLING
DIRECTION

LOWER SIDE

UPPER SIDE

EP 1 548 458 A2

FIG. 11A

FIG. 11B

FIG. 11C

EP 1 548 458 A2

# FIG. 12

START

FFT PROCESSING ～15

PEAK SIGNAL DETECTED IN EACH RECEPTION ANTENNA ? ～16

COMMON PEAK FOR ANTENNAS (A) AND (B)

PEAK FOR ANTENNAS (A) OR (B)

COMMON PEAK FOR ANTENNAS (B) AND (C)

CALCULATE SUM AND DIFFERENCE SIGNALS FOR ANTENNAS (A) AND (B) ～17

CALCULATE SUM AND DIFFERENCE SIGNALS FOR ANTENNAS (B) AND (C) ～20

CALCULATE RATE AND DISTANCE ～23

CALCULATE ANGLE ～18

CALCULATE ANGLE ～21

CALCULATE RATE AND DISTANCE ～19

CALCULATE RATE AND DISTANCE ～22

END

21

FIG. 13

EP 1 548 458 A2

FIG. 14

## FIG. 15

TRANSMISSION
BEAM 2A

TRANSMISSION
BEAM 2B

3a   3b   3c   2a  2b   ~1

FIG. 16

EP 1 548 458 A2

# FIG. 17

# FIG. 18

WALL

VEHICLE

RADAR ~1